(19) Europäisches Patentamt / European Patent Office / Office européen des brevets

(11) **EP 4 272 997 B1**

(12) **EUROPEAN PATENT SPECIFICATION**

(45) Date of publication and mention
of the grant of the patent:
**06.08.2025 Bulletin 2025/32**

(21) Application number: **22887430.1**

(22) Date of filing: **13.10.2022**

(51) International Patent Classification (IPC):
**B60L 53/80** *(2019.01)*     **B60L 53/53** *(2019.01)*
**B60L 58/13** *(2019.01)*     **H02J 7/00** *(2006.01)*
**H02J 7/04** *(2006.01)*

(52) Cooperative Patent Classification (CPC):
**B60L 53/80; B60L 58/13; H02J 7/00; H02J 7/0013;
H02J 7/0014; H02J 7/0024; H02J 7/0025;
H02J 7/0049; H02J 7/0069; H02J 7/007182;
H02J 7/007188; H02J 7/04; H02J 7/342;**
B60L 2210/10; B60L 2240/527;     (Cont.)

(86) International application number:
**PCT/KR2022/015508**

(87) International publication number:
**WO 2023/075227 (04.05.2023 Gazette 2023/18)**

(54) **BATTERY SWAPPING STATION AND BATTERY CHARGING METHOD USING SAME**

BATTERIEWECHSELSTATION UND BATTERIELADEVERFAHREN DAMIT

STATION DE PERMUTATION DE BATTERIE ET PROCÉDÉ DE CHARGE DE BATTERIE L'UTILISANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.10.2021 KR 20210143778**

(43) Date of publication of application:
**08.11.2023 Bulletin 2023/45**

(73) Proprietor: **LG Energy Solution, Ltd.
Seoul 07335 (KR)**

(72) Inventor: **LEE, Sunggun
Daejeon 34122 (KR)**

(74) Representative: **Plasseraud IP
104 Rue de Richelieu
CS92104
75080 Paris Cedex 02 (FR)**

(56) References cited:
WO-A1-2021/183311    WO-A2-2014/009369
CN-A- 105 493 378    JP-A- 2012 008 019
KR-A- 20120 114 490    KR-A- 20190 074 215
KR-B1- 101 528 079    US-A1- 2019 299 942
US-A1- 2020 148 073    US-A1- 2021 175 724

(52) Cooperative Patent Classification (CPC): (Cont.)
B60L 2240/80; H02J 2207/20; Y02T 10/70;
Y02T 10/7072; Y02T 90/12

**Description**

[Technical Field]

The present invention relates to a battery swapping station and a method for charging a battery using the battery swapping station, and more particularly, to a battery swapping station capable of quick charging and a method for charging a battery using the battery swapping station.

[Background Art]

As a problem of environmental pollution has emerged as a global social issue, various regulations restricting use of fuel vehicles are being implemented in each country, such as exhaust gas emission regulations.

Accordingly, the automobile industry is paying attention to a development of technology of electric vehicles which are eco-friendly vehicles that has high energy efficiency and can utilize existing electrical infrastructure.

In the field of developing technologies for commercialization of electric vehicles, it is essential not only to develop devices, but also to build a battery charging infrastructure.

A conventional battery swapping station (BSS) for battery charging is often additionally installed in existing buildings and power facilities such as convenience stores and public institutions.

Accordingly, a part of basic amount of power provided to an existing building is usually allocated for a conventional battery swapping station.

Therefore, the conventional battery swapping station has disadvantages that it is difficult to perform fast charging which requires a large amount of instantaneous power and that additional power reinforcement work is required for fast charging.

Examples of systems and methods for managing a plurality of exchangeable energy storage devices positioned in a storage-device exchange station can be found in US 2019/299942 A1, which discloses all features of the preamble of claim 1.

An example of a device for the electrical direct-current fast charging or discharging of energy storage devices can be found in WO 2014/009369 A2. An example of a system for exchanging a battery of an electric vehicle can be found in CN 105493378 A, which discloses all features of the preamble of claim 5.

An example of a battery charging station and method for managing batteries can be found in US 2021/175724 A1. An example of a dynamic management of charge can be found in WO 2021/183311 A1.

[Detailed Description of the Invention]

[Technical Problem]

In order to solve the problem, an object of the present invention is to provide a high-efficiency and low-cost battery swapping station.

In order to solve the problem, the other object of the present invention is to provide a high-efficiency and low-cost method for charging a battery using the battery swapping station.

[Technical Solution]

In order to achieve the objective of the present disclosure, a battery swapping station (BSS) is proposed according to claim 1.

The controller may further be configured to, upon operating in the standard charge mode, control the DC/DC converter to execute a buck mode to output a part of the external power as it is.

The DC/DC converter must be a bi-directional DC/DC converter.

The controller may further be configured to, upon operating in the fast charge mode, set input voltages of other DC/DC converters excluding a specific DC/DC converter higher than an output voltage of the specific DC/DC converter which is connected to the target battery to switch power transmission direction, thereby guiding charge current towards the target battery.

The battery swapping station may further comprise a switch individually connected between the battery charger and the DC/DC converter and configured to ground at least one the battery by switching to an ON state in the instance that the controller is in a discharge mode.

According to another embodiment of the present disclosure, a method of charging at least one battery individually accommodated in a battery charger by a battery swapping station is proposed according to claim 5.

The selecting a battery and operating in the fast charge mode to fast charge the target battery may include: in the instance that any fully charged battery does not exist, selecting a battery having the highest charge rate among the at least one battery as the target battery when the battery exchange request message is transmitted at the time; checking information about an expected time of arrival of the user and checking whether or not the target battery can be fully charged within the expected time of arrival of the user; and upon determining that it is possible to complete charging of the target battery within the expected time of arrival, fast charging the target battery by operating in the fast charge mode.

The method may further comprise, upon determining that it is not possible to complete charging of the target battery within the expected arrival time, maintaining operation in the standard charge mode to charge at least one non-charged battery among the at least one battery.

The operating in the fast charge mode may include: changing operation modes of other DC/DC converters except for a specific DC/DC converter connected to the target battery in the battery swapping station to a boost mode and setting set an input voltage of the other DC/DC converters higher than an output voltage of the specific DC/DC converter to switch power transmission direction, thereby guiding charge current towards the target battery.

The operating in the standard charge mode may include executing at least one DC/DC converter in the battery swapping station in a buck mode to equally distribute and output external power.

The method may further comprise charging at least one battery among the at least one battery that has not been fully charged by maintaining the operation in the standard charge mode in the instance that the fully charged battery exists.

The operating in the discharge mode may include:

checking whether or not any fully charged battery exists among the at least one battery; when a fully charged battery exists, checking whether there is a battery being charged among at least one battery other than the fully charged battery; and when there is no battery being charged, discharging the fully charged battery to a size of a battery drain.

The battery drain may be a magnitude of current that can be discharged by the at least one battery at the maximum at one time.

The method may further comprise charging at least one battery among the at least one battery that has not been fully charged by operating in the standard charge mode in the instance that any fully charged battery does not exist.

The method may further comprise switching to the standard charge mode and operating in the standard charge mode when the fully charged battery is exchanged by a user.

[Advantageous Effects]

A battery swapping station and a battery charging method using the same according to embodiments of the present invention may charge at least one battery accommodated in a battery charger according to a standard charge mode, a fast charge mode, and a discharge mode, thereby rapidly charging a target battery using allocated power provided from a grid and a charged battery without any additional power reinforcement work and preventing battery lifespan degradation caused from long-term persistence of fully charged state by adjusting a drain current of a battery that has been charged using the discharge mode, and thus, provide a high-efficiency and low-cost battery swapping station and a battery charging method using the same.

[Brief Description of the Drawings]

FIG. 1 is a block diagram of a battery swapping station according to embodiments of the present invention.
FIG. 2 is a hardware block diagram of a controller of a battery swapping station according to embodiments of the present invention.
FIG. 3 is a flowchart of a battery charging method using a battery swapping station according to embodiments of the present invention.
FIG. 4 is a flowchart of a battery charging method according to a discharging mode of a battery swapping station according to embodiments of the present invention.

| .D: | battery swapping station | R: | ground resistor |
|---|---|---|---|
| 1000: | AC/DC converter | 3000: | DC/DC converter |
| 5000: | switch | 7000: | controller |
| 100: | memory | | |
| 200: | processor | | |
| 300: | tranceiver | | |
| 400: | input interface | | |
| 500: | output interface | | |
| 600: | storage device | | |

(continued)

| 700: | bus |
|---|---|

[Best Mode]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the scope of the appended claims, i.e. including at least all features of at least one of the independent claims 1 or 5. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

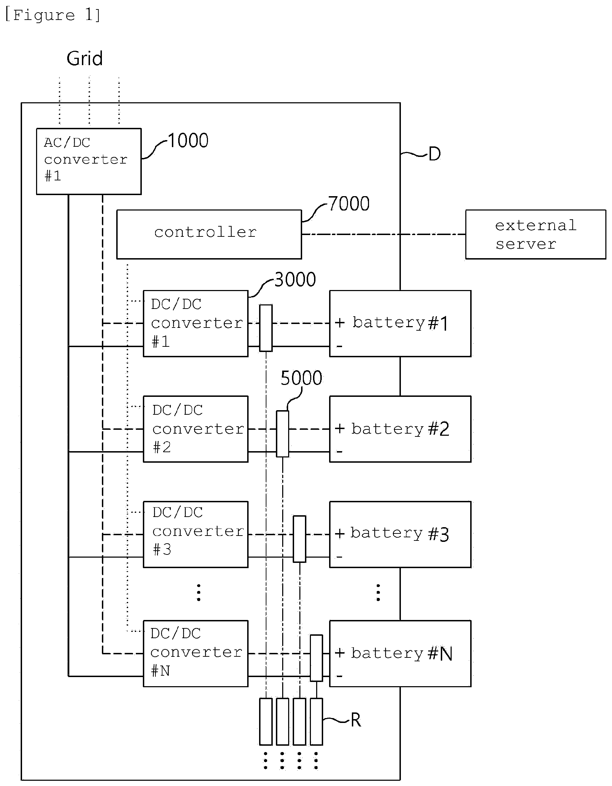

FIG. 1 is a block diagram of a battery swapping station according to embodiments of the present invention.

Referring to FIG. 1, the battery swapping station D may charge at least one battery acquired from a user and provide a charged battery to the user.

More specifically, the battery swapping station D may be provided in at least one facility where power is provided. Accordingly, the battery swapping station D may receive power allocated from the corresponding facility through the grid. Here, the allocated power may be power allocated from a corresponding facility to charge at least one battery accommodated in the battery swapping station D.

Hereinafter, the battery swapping station D according to embodiments of the present invention will be described in more detail for each configuration.

The battery swapping station D may include a battery charger (not shown), an AC/DC converter 1000, a DC/DC converter 3000, a switch 5000, and a controller 7000.

In addition, the battery swapping station D may interwork with an external server. Accordingly, the battery swapping station D may receive a battery exchange request message requested from a user through the external server.

A plurality of battery chargers (not shown) are provided and may accommodate at least one battery inserted from the outside by a user. Accordingly, the battery swapping station D may charge at least one battery accommodated in a battery charger (not shown). For example, a battery accommodated in a battery charger (not shown) may have a voltage of 100V, a charge current capacity of 30000mAh, and a power amount of 3000Wh.

In addition, the battery swapping station D may provide a fully charged battery among batteries accommodated in at least one battery charger (not shown) to a user.

A maximum charging current may be set for the battery charger (not shown). Accordingly, the controller 7000, which will be described later, can prevent the battery from being fully charged and degraded before the user arrives at the battery swapping station D during operation in a fast charge mode.

A plurality of AC/DC converters 1000 may be provided and may be individually connected to battery chargers (not shown) through DC/DC converters 3000 to be described later.

In other words, one end of the AC/DC converter 1000 may be connected to the grid, and the other end may be connected to the DC/DC converter 3000 individually. Accordingly, the AC/DC converter 1000 may individually transfer allocated power provided through the grid of the corresponding facility to a battery charger (not shown) through the DC/DC converter 3000.

According to an embodiment, the AC/DC converter 1000 may divide the power provided from the grid to amount of power allocated by the controller 7000 and provide each divided power to the DC/DC converter 3000. Accordingly, the DC/DC converter 3000 may transfer the divided amount of power to each battery charger (not shown).

Here, the AC/DC converter 1000 may convert a form of allocated power provided through the grid. For example, the AC/DC converter 1000 may convert the allocated power which was provided in a form of alternating current through the grid into a direct current form and separately provide it to the battery charger (not shown). Accordingly, a battery that is accommodated in a battery charger (not shown) and uses DC power can be charged.

As described above, the DC/DC converter 3000 may have one end individually connected to the AC/DC converter 1000 and the other end individually connected to a battery charger (not shown). Accordingly, the DC/DC converter 3000 can stably supply the DC power received from the AC/DC converter 1000 to the battery accommodated in the battery charger (not shown). For example, the DC/DC converter 3000 may be provided as a bi-directional DC/DC converter.

In addition, the DC/DC converter 3000 may be connected to a controller 7000 to be described later. Accordingly, the DC/DC converter 3000 may operate in a buck mode or a boost mode according to a charge mode of the controller 7000.

In more detail according to an embodiment, when the controller 7000 operates in a standard charge mode, the DC/DC converter 3000 may operate in a buck mode. The DC/DC converter 3000 in the buck mode may output power that is input from the AC/DC converter 1000 as it is, wherein the AC/DC converter 1000 is individually connected to the DC/DC converter 3000.

More specifically, according to another embodiment, when the controller 7000 operates in a fast charge mode, as to some of DC/DC converters 3000, directions of charging power may be switched from the battery chargers (not shown) to the grid direction by the controller 7000, and these DC/DC converters 3000 may operate in a boost mode. The inputs and outputs in the boost mode may be opposite to the inputs and outputs in the buck mode.

More specifically, the fast charge mode may be an operation mode of the controller 7000 that is executed when a battery exchange request message is received from a user through an external server. In the fast charge mode, a target battery to be exchanged may be selected and the target battery may be rapidly charged.

For fast charging of the target battery, at least one other DC/DC converter 3000 other than the DC/DC converter 3000 connected to the target battery is controlled by the controller 7000 to switch power transfer direction from the battery charger (not shown) to the grid direction. Accordingly, at least one other DC/DC converter 3000 may transmit charging power of at least one battery connected to the at least one other DC/DC converter 3000 to the DC/DC converter to which the target battery is connected.

In other words, when the controller 7000 operates in a fast charge mode, at least one other DC/DC converter 3000 other than the specific DC/DC converter 3000 connected to the target battery may operate in a boost mode.

According to an embodiment, at least one other DC/DC converter 3000 operating in the boost mode may change its output voltage by adjusting an opening/closing time ratio of the DC/DC converter.

For example, when an output voltage of the AC/DC converter 1000 is 400Vdc, the output voltage of an output terminal of the DC/DC converter 3000 connected to the target battery, the output terminal of the DC/DC converter 3000 being connected to the AC/DC converter 1000 may be changed to 399Vdc by the controller (7000).

In addition, the input voltage of the input terminal of at least one other DC/DC converter 3000 operating in the buck mode, except for the DC/DC converter connected to the target battery, the input terminal of at least one other DC/DC converter 3000 being connected to the AD/DC converter 1000, may be adjusted to 400Vdc. Accordingly, when the controller 7000 operates in a fast charge mode, the target battery can be rapidly charged through the DC/DC converter 3000 operating in the booster mode.

The standard charge mode and the fast charge mode will be described in more detail when the controller 7000 will be described later.

The switch 5000 may be individually connected between a battery charger (not shown) and the DC/DC converter 3000.

In addition, the switch 5000 is switched to an ON state in a discharge mode of the controller 7000, and the battery can be discharged by grounding the battery.

More specifically, when all the batteries in the battery swapping station D are fully charged or charged to a predetermined reference, the switch 5000 connected to a fully charged battery may be turned ON by the controller 7000, thereby discharging the battery with a battery drain size.

Here, the battery drain may be a size of current that can be discharged at the maximum at one time in a battery. Here, the size of the battery drain (Drain) may be individually adjusted by a resistor (R) connected to a ground direction.

The controller 7000 may control a battery charging operation of the battery swapping station D.

More specifically, the controller 7000 may operate in a standard charge mode, a fast charge mode, and a discharge mode.

The standard charge mode may be a basic charge mode performed when at least one battery is mounted in a battery charger (not shown).

According to an embodiment, the controller 7000 may equally distribute and supply allocated power transmitted from the grid to at least one battery charger (not shown) in a standard charge mode.

For example, the controller 7000 when operating in a standard charge mode may supply charging power of 2.5 KWh to each of battery chargers (not shown) in case that the allocated power is 10KWh and four battery chargers (not shown) are provided.

In addition, in the standard charge mode, the battery charger (not shown) may charge the battery accommodated in the battery charger (not shown) at a 0.5 C-rate by the controller 7000, and may supply a charging current of 15A.

Here, the C-rate may be an amount that can be charged for a corresponding time when a battery is charged with a specific constant current. For example, when a battery having a charge capacity of **30000** mAh is used, a battery charger (not shown) may output a maximum charging current of 15 A at a 0.5 C-rate.

The fast charge mode may be a mode performed when a battery exchange message is received by a user through an external server.

As described above, the controller 7000 may select a target battery for fast charging when operating in the fast charge mode. Here, the target battery is a target battery to be exchanged according to a user request, and a battery with the highest charge rate among at least one battery accommodated in the battery swapping station D, at the time when the battery exchange request message is received, may be selected as a target battery.

Thereafter, the controller 7000 may change the operation modes of other DC/DC converters 3000 other than the DC/DC converter 3000 connected to the target battery to a boost mode. Here, the controller 7000 may set the input voltage of at least one other battery other than the target battery higher than the output voltage of the target battery, so that the target battery may be rapidly charged using the allocated power provided from the grid and the charged power of the batteries connected to other DC/DC converters 3000.

Here, the controller 7000 may calculate an allowable current value by setting a threshold value for the current delivered to the target battery so that charging of the target battery can be completed when the user arrives.

In more detail about the method of calculating the allowable current value, the controller 7000 may check a state current of the selected target battery. According to an embodiment, the state current of the battery may be provided in units of mA.

Thereafter, the controller 7000 may calculate a battery charge capacity (State of Charge) required to complete charging of the target battery.

According to an embodiment, the charge capacity of the target battery may be a value obtained by subtracting the state current of the target battery at the time when the battery exchange request message is received from the maximum current capacity of the target battery.

The controller 7000 may check information about an expected time of arrival of the user at the battery swapping station D, which is included in the battery exchange request message.

Thereafter, the controller 7000 may calculate the allowable current IP of the target battery so that charging of the target battery can be completed according to the expected arrival time of the user.

According to an embodiment, the allowable current value ($I_P$) of the battery may be calculated as in Equation 1 below.

[Equation 1]

$$I_P = (((A_{total} - A_{current})/T_{min})/60)/1000$$

$I_P$: permissible current per hour of target battery (Ah)
$A_{total}$: maximum current capacity (mA) of target battery
$A_{current}$: state current of target battery (mA)
$T_{min}$: estimated time of user's arrival (min)

For example, the controller 7000 may supply an allowable current of 60 A to the target battery in a fast charge mode, and for this purpose, the controller 7000 may discharge at least one other battery other than the target battery at a 2 C-rate.

Here, the C-rate may be an amount that can be discharged for a corresponding time when the battery is discharged with a specific constant current. For example, if a battery with a charging capacity of 30000 mAh is used, the battery can output a maximum charging current of 60 A at a 2 C-rate.

Conventional battery charging devices do not consider an allowable current for charging the battery, but set a charging current to the maximum value. Accordingly, in the conventional battery charging device, battery charging is completed before a user arrives and the battery charging continues even after the battery is fully charged, so that battery deterioration is accelerated.

Meanwhile, the controller 7000 in the battery swapping station D according to embodiments of the present invention may set an allowable current value for adjusting a charging time of the battery in real time so that charging of the target battery can be completed according to the expected arrival time of the user, thus preventing deterioration of the battery.

The discharge mode may be a control mode that is operated when a predetermined time elapses after the battery is completely charged.

For example, in the instance that a specific battery that has been fully charged among at least one battery accommodated in a battery charger (not shown) exists, the controller 7000 may control a switch operation to ON state according to whether a battery being charged among other batteries excluding the specific battery exists.

According to an embodiment, the controller 7000 may switch a charging direction of the DC/DC converter 3000 connected to a specific fully charged battery in the instance that there is a battery being charged among other batteries. Accordingly, the controller 7000 may increase charging power of the battery being charged and prevent a state of health (SoH) of the fully charged battery from deteriorating.

According to another embodiment, the controller 7000 may turn on at least one switch 5000 connected to the fully charged batteries when all the batteries are fully charged or charged to a predetermined standard, thereby discharging the battery with a drain size. For example, the controller 7000 may discharge the battery with a drain level until a state of charge (SOC) of the battery becomes 90%.

Operations according to control modes of the controller 7000 will be described in more detail when a battery charging method is described later.

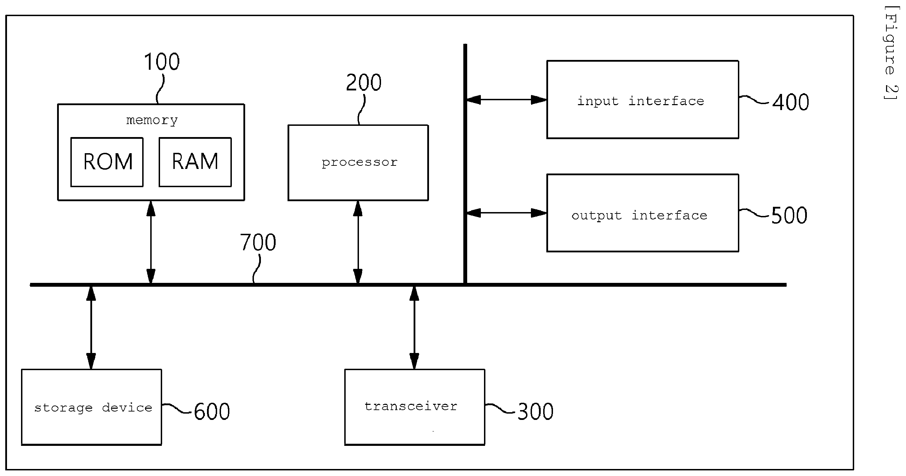

In addition, the controller 7000 may operate with at least one hardware configuration. The hardware configuration of the controller 7000 will be described in detail with reference to FIG. 2 below.

FIG. 2 is a hardware block diagram of a controller of a battery swapping station according to embodiments of the present invention.

Referring to FIG. 2, the controller 7000 may include a memory 100, a processor 200, a transceiver 300, an input interface 400, an output interface 500, and a storage device 600.

According to an embodiment, each of the components 100, 200, 300, 400, 500, and 600 included in the controller 7000 may be connected by a bus 700 to communicate with each other.

Among the components 100, 200, 300, 400, 500, and 600 of the controller 7000, the memory 100 and the storage device 600 may be configured with at least one of a volatile storage medium and a non-volatile storage medium. For example, the memory 100 and the storage device 600 may include at least one of a read only memory (ROM) and a random access memory (RAM).

Among them, the memory 100 may include at least one command executed by the processor 200.

According to an embodiment, the at least one command includes a command to charge at least one battery accommodated in the battery charger; a command to check whether a battery exchange request message transmitted from a user through an external server is received; a command to operate in a standard charge mode and charging at least one battery accommodated in the battery charger in the instance that the battery exchange request message has not been received; a command to check whether a fully charged battery among the at least one battery exists in the instance that the battery exchange request message is received; and in the instance that any fully charged battery does not exist, a command to select a battery having the highest charge rate among the at least one battery as a target battery at the time when the battery exchange request message is transmitted and operating in a fast charge mode to fast charging the target battery.

The processor 200 may mean a central processing unit (CPU), a graphics processing unit (GPU), or a dedicated processor on which methods according to embodiments of the present invention are performed.

As described above, the processor 200 may execute at least one program command stored in the memory 100.

In the above, the battery swapping station according to embodiments of the present invention has been described. Hereinafter, a battery charging method according to operations of the controller of the battery swapping station will be described in detail.

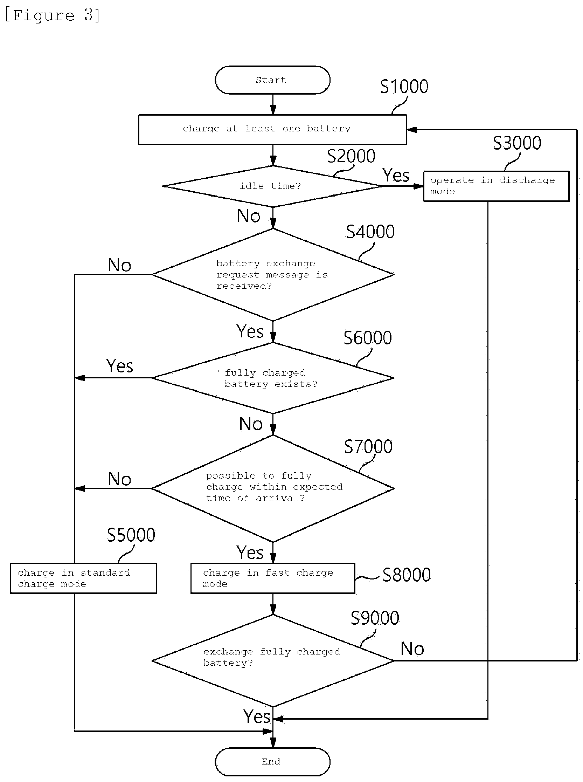

FIG. 3 is a flowchart of a battery charging method using a battery swapping station according to embodiments of the present invention.

Referring to FIG. 3, the controller 7000 in the battery swapping station may charge at least one battery accommodated in a battery charger (not shown) (S1000). Here, the controller 7000 may charge at least one battery in a standard charge mode.

According to an embodiment, the controller 7000 may equally distribute and supply allocated power transmitted from the grid to at least one battery charger (not shown) in a standard charge mode.

For example, when the allocated power is 10 KWh and four battery chargers (not shown) are provided, charging power of 2.5 KWh may be supplied to each of the battery chargers (not shown).

The controller 7000 may operate in a discharge mode (S3000) when the battery swapping station D reaches a preset idle time (S2000). Here, the idle time may be a time T elapsed after at least one charged battery in the battery charger (not shown) is fully charged.

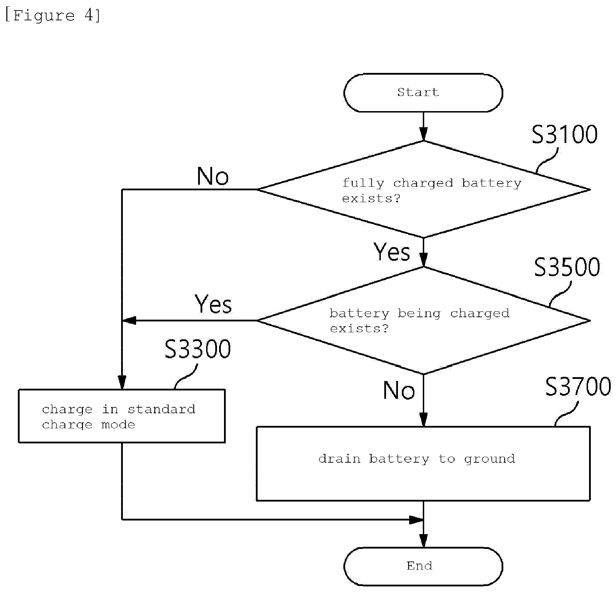

In general, deterioration of a battery can be accelerated if the time a battery is maintained in a fully charged state is prolonged. Accordingly, the controller 7000 may operate in a discharge mode when at least one battery in a fully charged state reaches a preset idle time (S2000). The operation of the controller 7000 according to the discharge mode will be described in more detail with reference to FIG. 4 below.

FIG. 4 is a flowchart of a battery charging method according to a discharging mode of a battery swapping station according to embodiments of the present invention.

Referring to FIG. 4, when operating in a discharge mode, the controller 7000 may check whether a fully charged battery exists (S3100).

Here, in case that there is no fully charged battery, the controller 7000 may charge at least one uncharged battery by maintaining its operation in the standard charge mode (S3300).

Meanwhile, when a fully charged battery exists, the controller 7000 may check whether a battery being charged exists (S3500).

According to an embodiment, when other batteries other than a specific battery that has been fully charged are being charged, the controller 7000 may change a charging direction of the DC/DC converter 3000 connected to the specific battery. Thereafter, the controller 7000 may maintain operation in the standard charge mode (S3300). Accordingly, the controller 7000 may increase charging power of the battery being charged by distributing allocated power to the other battery chargers (not shown) except for the charger (not shown) of the battery that has been fully charged, thereby preventing deterioration of a lifespan (State of Health: SoH) of a fully charged battery.

According to another embodiment, the controller 7000 turns on at least one switch 5000 connected to a fully charged battery when there is no battery being charged, in other words, when charging of all batteries is completed, discharge the battery with a drain size (S3700).

Here, the battery drain may be a size of current that can be discharged at the maximum at one time in the battery. Here, the size of the battery drain (Drain) may be individually adjusted by a resistor (R) connected in the ground direction.

According to an embodiment, the controller 7000 may discharge the battery with a drain level until a state of charge (SOC) of the battery reaches a stable state. For example, the controller 7000 may discharge the battery with a drain level until a state of charge (SOC) of the battery becomes 90%.

Meanwhile, a battery that is discharged with a battery drain size according to an embodiment of the present invention is not limited to the description, and a fully charged battery or a battery that is charged over a predetermined reference set by a user may be applied.

Referring back to FIG. 3, when the idle time has not reached (S2000), the controller 7000 may check whether a battery exchange request message transmitted from the user through an external server is received (S4000). For example, the battery exchange request message may include information about an expected time of arrival of a user moving toward a battery swapping station. For example, the estimated arrival time information may be described and provided in minutes.

According to an embodiment, when the battery exchange request message is not received, the controller 7000 may maintain its operation in a standard charge mode (S5000) to charge at least one battery accommodated in a battery charger (not shown).

According to another embodiment, when a battery exchange request message is received, the controller 7000 may check whether a fully charged battery exists among at least one battery accommodated in a battery charger (not shown) (S6000). According to an embodiment, the controller 7000 may determine whether a fully charged battery exists by checking a charge current capacity (mAh) of at least one battery at the time when the battery exchange request message is transmitted.

Here, if a fully charged battery exists, the controller 7000 may maintain its operation in the standard charge mode (S5000) to charge at least one battery that has not been fully charged.

Meanwhile, when a fully charged battery does not exist, the controller 7000 may select a battery having the highest charge rate as a target battery at the time when the battery exchange request message is received.

Thereafter, the controller 7000 may check information on the expected time of arrival of the user to determine whether or not the target battery can be fully charged within the expected time of arrival of the user (S7000).

More specifically, the controller 7000 may calculate the sum of allocated power transmitted from the grid and the allowable power (see Equation 1) obtained from at least one battery excluding the target battery, and check if it is possible to fully charge the target battery within the expected arrival time of the user.

According to an embodiment, when it is not possible to fully charge the target battery within the expected arrival time, the controller 7000 may maintain its operation in the standard charge mode (S5000).

According to another embodiment, when it is possible to fully charge the target battery within the expected arrival time, the controller 7000 may switch its operation mode to a fast charge mode (S8000).

More specifically, as described above, the controller 7000, in the fast charge mode, may change the operation mode of other DC/DC converters 3000 other than the DC/DC converter 3000 connected to the target battery to a boost mode.

The controller 7000 may set an input voltage of at least one other battery other than the target battery higher than the target battery voltage, so that the controller 7000 can rapidly charge the target battery by charge current incoming from at least one other battery, together with the allocated power provided from the grid.

Thereafter, when the user exchanges the fully charged battery (S9000), the controller 7000 may change the charging mode to a standard charge mode and restart charging of a replaced discharged battery.

The battery swapping station and the battery charging method using the battery swapping station according to embodiments of the present invention have been described above.

A battery swapping station and a battery charging method using the same according to embodiments of the present invention may charge at least one battery accommodated in a battery charger according to a standard charge mode, a fast charge mode, and a discharge mode, thereby rapidly charging a target battery using allocated power provided from a grid and a charged battery without any additional power reinforcement work and preventing battery lifespan degradation caused from long-term persistence of fully charged state by adjusting a drain current of a battery that has been charged using the discharge mode, and thus, provide a high-efficiency and low-cost battery swapping station and a battery charging method using the same.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed, the arrangements and methods resulting from said corrections and modifications being considered to form part of the present invention if they do not contradict the appended claims, i.e. if they comprise at least all features of at least one of the independent claims 1 or 5.

## Claims

1. A battery swapping station (D) configured to charge at least one battery individually accommodated in at least one battery charger, the battery swapping station comprising:

   at least two battery chargers, each of them configured to accommodate one battery;
   an AC/DC converter (1000) configured to convert external power provided in an alternating current, AC, form into a direct current, DC, form;
   a DC/DC converter (3000) including a first end connected to the AC/DC converter (1000) and a second end individually connected to the at least one battery charger to individually provide a part of external power input from the AC/DC converter (1000) to the at least one battery charger; and
   a controller (7000) connected to the DC/DC converter (3000) and configured to:

      control an operation of the DC/DC converter (3000) according to an operation in a standard charge mode or in a fast charge mode, wherein the standard charge mode is configured to provide lower maximum charging current compared to the fast charge mode, and

when the at least two batteries are individually accommodated in the corresponding at least two battery chargers, then in the fast charge mode, the controller (7000) is configured to select a target battery among the at least two batteries and fast charge the target battery;

**characterized in that** when the at least one battery is fully charged for a preset idle time, the controller (7000) is further configured to operate in a discharge mode for the respective fully charged battery, such that when at least one battery among the at least two batteries other than the fully charged battery is being charged, the controller (7000) is configured to change a charging direction of the respective DC/DC converter (3000) of the fully charged battery to charge the at least one battery other than the fully charged battery in the standard charge mode.

2. The battery swapping station (D) of claim 1, wherein the controller (7000) is further configured to, upon operating in the standard charge mode, control the corresponding DC/DC converter (3000) that is individually connected to the AC/DC converter to execute a buck mode to output a part of the external power input from the individually connected AC/DC converter.

3. The battery swapping station (D) of claim 1, when the at least two batteries are individually accommodated in the corresponding at least two battery chargers, the controller (7000) is further configured to, upon operating in the fast charge mode, set input voltages of other DC/DC converters (3000) excluding a specific DC/DC converter (3000) higher than an output voltage of the specific DC/DC converter (3000) which is connected to the target battery to switch power transmission direction, thereby guiding charge current towards the target battery.

4. The battery swapping station (D) of claim 1, when the at least one battery is fully charged and no battery other than the fully charged battery is being charged, further comprising a switch (5000) individually connected between the at least one battery charger and the DC/DC converter (3000) and configured to discharge the at least one fully charged battery by switching to an ON state in the instance that the controller (7000) is in the discharge mode, by grounding the respective fully charged battery through a resistor (R) connected to a ground direction.

5. A method of charging at least one battery individually accommodated in a battery charger of a battery swapping station (D), the method comprising:

charging the at least one battery accommodated in the battery charger;
checking whether a battery exchange request message transferred from a user through an external server is received;
operating in a standard charge mode and charging the at least one battery accommodated in the battery charger in the instance that the battery exchange request message has not been received;
checking whether a fully charged battery among the at least two batteries exists in the instance that the battery exchange request message is received; and
in the instance that any fully charged battery does not exist, selecting a battery having the highest state of charge among the at least two batteries as a target battery at the time when the battery exchange request message is received and operating in a fast charge mode to fast charge the target battery, wherein the standard charge mode is configured to provide lower maximum charging current compared to the fast charge mode;
**characterized in that** in the instance that any fully charged battery does exist and the at least one battery is fully charged for a preset idle time, the method further comprises operating the respective fully charged battery in a discharge mode, such that when at least one battery among the at least two batteries other than the fully charged battery is being charged, switching a direction of output power of the respective DC/DC converter (3000) of the fully charged battery to charge the at least one battery other than the fully charged battery in the standard charge mode.

6. The method of claim 5, wherein the selecting the battery and operating in the fast charge mode to fast charge the target battery further includes:

when a fully charged battery does not exist, selecting a battery having the highest state of charge among the at least two batteries as the target battery when the battery exchange request message is received at the time;
checking information about an expected time of arrival of the user and checking whether or not the target battery can be fully charged within the expected time of arrival of the user; and
upon determining that it is possible to complete charging of the target battery within the expected time of arrival, fast charging the target battery by operating in the fast charge mode.

7. The method of claim 6, further comprising:

upon determining that it is not possible to complete charging of the target battery within the expected arrival time, maintaining operation in the standard charge mode to charge at least one not fully charged battery among the at least two batteries.

8. The method of claim 5, wherein the operating in the fast charge mode includes:

changing operation modes of other DC/DC converters (3000) except for a specific DC/DC converter (3000) connected to the target battery in the battery swapping station (D) to a boost mode; and setting input voltages of the other DC/DC converters (3000) higher than an output voltage of the specific DC/DC converter (3000) to switch power transmission direction, thereby guiding charge current towards the target battery.

9. The method of claim 5, wherein the operating in the standard charge mode includes:
executing the corresponding DC/DC converter (3000) in the battery swapping station (D) in a buck mode to equally distribute and output external power across the at least two batteries.

10. The method of claim 5, further comprising charging at least one battery among the at least two batteries that is not fully charged by maintaining the operation in the standard charge mode in the instance that the fully charged battery exists.

11. The method of claim 5, wherein the operating in the discharge mode further includes:

checking whether or not any fully charged battery exists among the at least two batteries;
when a fully charged battery exists, checking whether there is a battery being charged among at least two batteries other than the fully charged battery; and
when there is no battery being charged, discharging the fully charged battery according to a size of a battery drain, wherein the size of the battery drain is a maximum allowable current that is to be safely discharged to reach a stable state of the battery defined by the state of charge.

**Patentansprüche**

1. Batteriewechselstation (D), welche dazu eingerichtet ist, wenigstens eine Batterie zu laden, welche individuell in wenigstens einer Batterieladeeinheit aufgenommen ist, wobei die Batteriewechselstation (D) umfasst:

wenigstens zwei Batterieladeeinheiten, wobei jede davon dazu eingerichtet ist, eine Batterie aufzunehmen;
einen AC/DC-Wandler (1000), welcher dazu eingerichtet ist, externe Energie, welche als Wechselstrom, AC, bereitgestellt ist, in Gleichstrom, DC, umzuwandeln;
einen DC/DC-Wandler (3000), welcher ein erstes Ende, welches mit dem AC/DC-Wandler (1000) verbunden ist, und ein zweites Ende umfasst, welches individuell mit der wenigstens einen Batterieladeeinheit verbunden ist, um einen Teil eines externe Energie-Eingangs von dem AC/DC-Wandler (1000) zu der wenigstens einen Batterieladeeinheit individuell bereitzustellen; und
eine Steuereinheit (7000), welche mit dem DC/DC-Wandler (3000) verbunden ist und eingerichtet ist, zum:

Steuern eines Betriebs des DC/DC-Wandlers (3000) gemäß einem Betrieb in einem Standardlademodus oder in einem Schnelllademodus, wobei der Standardlademodus dazu eingerichtet ist, im Vergleich zu dem Schnelllademodus einen niedrigeren Maximalladestrom bereitzustellen, und
wenn die wenigstens zwei Batterien individuell in den entsprechenden wenigstens zwei Batterieladeeinheiten aufgenommen sind, die Steuereinheit (7000) daraufhin in dem Schnelllademodus dazu eingerichtet ist, eine Zielbatterie unter den wenigstens zwei Batterien auszuwählen und die Zielbatterie zu schnellladen;
**dadurch gekennzeichnet, dass**, wenn die wenigstens eine Batterie für eine voreingestellte Wartezeit vollständig geladen ist, die Steuereinheit (7000) ferner dazu eingerichtet ist, für die jeweilige vollständig geladene Batterie in einem Entlademodus tätig zu sein, so dass, wenn wenigstens eine Batterie unter den wenigstens zwei Batterien geladen wird, welche eine andere als die vollständig geladene Batterie ist, die Steuereinheit (7000) dazu eingerichtet ist, eine Laderichtung des jeweiligen DC/DC-Wandlers (3000) der vollständig geladenen Batterie zu ändern, um die wenigstens eine Batterie, welche eine andere als die vollständig geladene Batterie ist, in dem Standardlademodus zu laden.

**2.** Batteriewechselstation (D) nach Anspruch 1, wobei die Steuereinheit (7000) ferner im Zuge eines Betreibens in dem Standardlademodus dazu eingerichtet ist, den entsprechenden DC/DC-Wandler (3000) zu steuern, welcher individuell mit dem AC/DC-Wandler verbunden ist, um einen Buck-Modus auszuführen, um einen Teil des externe Energie-Eingangs von den individuell verbundenen AC/DC-Wandler auszugeben.

**3.** Batteriewechselstation (D) nach Anspruch 1, wobei, wenn die wenigstens zwei Batterien individuell in den entsprechenden wenigstens zwei Batterieladeeinheiten aufgenommen sind, die Steuereinheit (7000) ferner im Zuge eines Betreibens in dem Schnelllademodus dazu eingerichtet ist, Eingangsspannungen anderer DC/DC-Wandler (3000), mit Ausnahme eines spezifischen DC/DC-Wandlers (3000), höher als eine Ausgangsspannung des spezifischen DC/DC-Wandlers (3000) einzustellen, welcher mit der Zielbatterie verbunden ist, um eine Energieübertragungsrichtung zu ändern, wodurch ein Ladestrom in Richtung der Zielbatterie geführt wird.

**4.** Batteriewechselstation (D) nach Anspruch 1, wenn die wenigstens eine Batterie vollständig geladen ist und keine andere Batterie als die vollständig geladene Batterie geladen wird, ferner umfassend einen Schalter (5000), welcher individuell zwischen der wenigstens einen Batterieladeeinheit und dem DC/DC-Wandler (3000) geschalten ist und welcher dazu eingerichtet ist, die wenigstens eine vollständig geladene Batterie durch Schalten in einen AN-Zustand in dem Fall zu entladen, dass die Steuereinheit (7000) in dem Entlademodus ist, indem die jeweilige vollständig geladene Batterie durch einen Widerstand (R) geerdet wird, welcher mit einer Bodenleitung verbunden ist.

**5.** Verfahren zum Laden wenigstens einer Batterie, welche individuell in einer Batterieladeeinheit einer Batteriewechselstation (D) aufgenommen ist, wobei das Verfahren umfasst:

Laden der wenigstens einen Batterie, welche in der Batterieladeeinheit aufgenommen ist;
Überprüfen, ob eine Batterieaustausch-Anfragenachricht erhalten worden ist, welche durch einen externen Server von einem Nutzer übertragen wird;
Betreiben in einem Standardlademodus und Laden der wenigstens einen Batterie, welche in der Batterieladeeinheit aufgenommen ist, in dem Fall, dass die Batterieaustausch-Anfragenachricht nicht erhalten worden ist;
Überprüfen, ob unter den wenigstens zwei Batterien eine vollständig geladene Batterie vorhanden ist, in dem Fall, dass die Batterieaustausch-Anfragenachricht erhalten worden ist; und
in dem Fall, dass eine jegliche vollständig geladene Batterie nicht vorhanden ist, Auswählen einer Batterie, welche unter den wenigstens zwei Batterie den höchsten Ladezustand aufweist, als eine Zielbatterie zu dem Zeitpunkt, wenn die Batterieaustausch-Anfragenachricht erhalten worden ist, und Betreiben in einem Schnellladezustand, um die Zielbatterie zu schnellladen, wobei der Standardlademodus dazu eingerichtet ist, im Vergleich zu dem Schnelllademodus einen niedrigeren Maximalladestrom bereitzustellen;
**dadurch gekennzeichnet, dass** in dem Fall, dass eine jegliche vollständig geladene Batterie vorhanden ist und die wenigstens eine Batterie für eine voreingestellte Wartezeit vollständig geladen ist, das Verfahren ferner ein Betreiben der jeweiligen vollständig geladenen Batterie in einem Entlademodus umfasst, so dass, wenn wenigstens eine Batterie unter den wenigstens zwei Batterien geladen wird, welche eine andere als die vollständig geladene Batterie ist, ein Schalten einer Richtung einer Ausgabeenergie des jeweiligen DC/DC-Wandlers (3000) der vollständig geladenen Batterie durchgeführt wird, um die wenigstens eine Batterie, welche eine andere als die vollständig geladene Batterie ist, in dem Standardlademodus zu laden.

**6.** Verfahren nach Anspruch 5, wobei das Auswählen der Batterie und das Betreiben in dem Schnelllademodus, um die Zielbatterie zu schnellladen, ferner umfasst:

wenn eine vollständig geladene Batterie nicht vorhanden ist, Auswählen einer Batterie, welche unter den wenigstens zwei Batterien den höchsten Ladezustand aufweist, als die Zielbatterie, wenn die Batterieaustausch-Anfragenachricht zu dem Zeitpunkt erhalten wird;
Überprüfen von Informationen über einen erwarteten Ankunftszeitpunkt des Nutzers und Überprüfen, ob die Zielbatterie innerhalb des erwarteten Ankunftszeitpunkt des Nutzers vollständig geladen werden kann oder nicht; und
im Zuge eines Bestimmens, dass es möglich ist, ein Laden der Zielbatterie innerhalb des erwarteten Ankunftszeitpunkts abzuschließen, Schnellladen der Zielbatterie durch Betreiben in dem Schnelllademodus.

**7.** Verfahren nach Anspruch 6, ferner umfassend:

im Zuge eines Bestimmens, dass es nicht möglich ist, ein Laden der Zielbatterie innerhalb des erwarteten Ankunftszeitpunkts abzuschließen,

Beibehalten eines Betriebs in dem Standardlademodus, um unter den wenigstens zwei Batterien wenigstens eine nicht vollständig geladene Batterie zu laden.

8. Verfahren nach Anspruch 5, wobei das Betreiben in dem Schnelllademodus umfasst:

Ändern von Betriebsmodi anderer DC/DC-Wandler (3000), mit Ausnahme eines spezifischen DC/DC-Wandlers (3000), welcher in der Batteriewechselstation (D) mit der Zielbatterie verbunden ist, zu einem Boost-Modus; und Einstellen von Eingangsspannungen der anderen DC/DC-Wandler (3000) höher als eine Ausgangsspannung des spezifischen DC/DC-Wandlers (3000), um eine Energieübertragungsrichtung zu ändern, wodurch ein Ladestrom in Richtung der Zielbatterie geführt wird.

9. Verfahren nach Anspruch 5, wobei das Betreiben in dem Schnelllademodus umfasst:
Ausführen der entsprechenden DC/DC-Wandler (3000) in der Batteriewechselstation (D) in einem Buck-Modus, um eine externe Energie über die wenigstens zwei Batterien gleichmäßig zu verteilen und auszugeben.

10. Verfahren nach Anspruch 5, ferner umfassend ein Laden wenigstens einer Batterie unter den wenigstens zwei Batterien, welche nicht vollständig geladen ist, durch Beibehalten des Betreibens in dem Standardlademodus in dem Fall, dass die vollständig geladene Batterie vorhanden ist.

11. Verfahren nach Anspruch 5, wobei das Betreiben in dem Entlademodus ferner umfasst:

Überprüfen, ob unter den wenigstens zwei Batterien eine jegliche vollständig geladene Batterie vorhanden ist oder nicht;
wenn eine vollständig geladene Batterie vorhanden ist, Überprüfen, ob unter wenigstens zwei Batterien, welche eine andere als die vollständig geladene Batterie sind, eine Batterie vorhanden ist, welche geladen wird; und
wenn keine Batterie vorhanden ist, welche geladen wird, Entladen der vollständig geladenen Batterie gemäß einem Ausmaß eines Batterieverbrauchs, wobei das Ausmaß des Batterieverbrauchs ein maximal zulässiger Strom ist, welcher sicher entladen werden soll, um einen stabilen Zustand der Batterie zu erreichen, welcher durch den Ladezustand definiert wird.

## Revendications

1. Station d'échange de batterie (D) configurée pour charger au moins une batterie logée individuellement dans au moins un chargeur de batterie, la station d'échange de batterie comprenant :

au moins deux chargeurs de batterie, chacun d'entre eux étant configuré pour loger une batterie ;
un convertisseur CA/CC (1000) configuré pour convertir une alimentation externe fournie sous forme de courant alternatif, CA, en un courant continu, CC ;
un convertisseur CC/CC (3000) comportant une première extrémité connectée au convertisseur CA/CC (1000) et une deuxième extrémité connectée individuellement à l'au moins un chargeur de batterie pour fournir individuellement une partie de l'alimentation externe provenant du convertisseur CA/CC (1000) à l'au moins un chargeur de batterie ; et
un dispositif de commande (7000) connecté au convertisseur CC/CC (3000) et configuré pour :

commander un fonctionnement du convertisseur CC/CC (3000) selon un fonctionnement dans un mode de charge standard ou dans un mode de charge rapide, dans laquelle le mode de charge standard est configuré pour fournir un courant de charge maximal inférieur par rapport au mode de charge rapide, et
lorsque les au moins deux batteries sont logées individuellement dans les au moins deux chargeurs de batterie correspondants, alors en mode de charge rapide, le dispositif de commande (7000) est configuré pour sélectionner une batterie cible parmi les au moins deux batteries et charger rapidement la batterie cible ;
**caractérisé en ce que** lorsque l'au moins une batterie est complètement chargée pendant un temps d'inactivité prédéfini, le dispositif de commande (7000) est en outre configuré pour fonctionner dans un mode de décharge pour la batterie complètement chargée respective, de sorte que lorsque l'au moins une batterie parmi les au moins deux batteries autres que la batterie complètement chargée est en cours de charge, le dispositif de commande (7000) soit configuré pour modifier une direction de charge du convertisseur CC/CC (3000) respectif de la batterie complètement chargée pour charger l'au moins une batterie autre que la batterie complètement chargée en mode de charge standard.

**2.** Station d'échange de batterie (D) selon la revendication 1, dans laquelle le dispositif de commande (7000) est en outre configuré pour, lors du fonctionnement en mode de charge standard, commander le convertisseur CC/CC (3000) correspondant qui est connecté individuellement au convertisseur CA/CC pour exécuter un mode d'abaissement pour délivrer une partie de l'alimentation externe provenant du convertisseur CA/CC connecté individuellement.

**3.** Station d'échange de batterie (D) selon la revendication 1, lorsque les au moins deux batteries sont logées individuellement dans les au moins deux chargeurs de batterie correspondants, le dispositif de commande (7000) est en outre configuré pour, lors du fonctionnement en mode de charge rapide, régler des tensions d'entrée d'autres convertisseurs CC/CC (3000) à l'exclusion d'un convertisseur CC/CC (3000) spécifique de façon à ce qu'elles soient supérieures à une tension de sortie du convertisseur CC/CC (3000) spécifique qui est connecté à la batterie cible pour commuter une direction de transmission d'alimentation, guidant ainsi le courant de charge vers la batterie cible.

**4.** Station d'échange de batterie (D) selon la revendication 1, lorsque l'au moins une batterie est complètement chargée et qu'aucune batterie autre que la batterie complètement chargée n'est en cours de charge, comprenant en outre un commutateur (5000) connecté individuellement entre l'au moins un chargeur de batterie et le convertisseur CC/CC (3000) et configuré pour décharger l'au moins une batterie complètement chargée en passant à un état de marche dans le cas où le dispositif de commande (7000) est en mode de décharge, en mettant à la terre la batterie complètement chargée respective par le biais d'une résistance (R) connectée à une direction de terre.

**5.** Procédé de charge d'au moins une batterie logée individuellement dans un chargeur de batterie d'une station d'échange de batterie (D), le procédé comprenant :

la charge de l'au moins une batterie logée dans le chargeur de batterie ;
la vérification de la réception d'un message de demande de remplacement de batterie transmis par un utilisateur par l'intermédiaire d'un serveur externe ;
le fonctionnement dans un mode de charge standard et la charge de l'au moins une batterie logée dans le chargeur de batterie dans le cas où le message de demande de remplacement de batterie n'a pas été reçu ;
la vérification de l'existence d'une batterie complètement chargée parmi les au moins deux batteries dans le cas où le message de demande de remplacement de batterie est reçu ; et
dans le cas où il n'existe aucune batterie complètement chargée, la sélection d'une batterie ayant l'état de charge le plus élevé parmi les au moins deux batteries comme batterie cible au moment où le message de demande de remplacement de batterie est reçu et le fonctionnement dans un mode de charge rapide pour charger rapidement la batterie cible, dans lequel le mode de charge standard est configuré pour fournir un courant de charge maximal inférieur par rapport au mode de charge rapide ;
**caractérisé en ce que** dans le cas où il existe une batterie complètement chargée et où l'au moins une batterie est complètement chargée pendant un temps d'inactivité prédéfini, le procédé comprend en outre le fonctionnement de la batterie complètement chargée respective dans un mode de décharge, de sorte que lorsque l'au moins une batterie parmi les au moins deux batteries autres que la batterie complètement chargée soit en cours de charge, la commutation d'une direction d'alimentation de sortie du convertisseur CC/CC (3000) respectif de la batterie complètement chargée pour charger l'au moins une batterie autre que la batterie complètement chargée en mode de charge standard.

**6.** Procédé selon la revendication 5, dans lequel la sélection de la batterie et le fonctionnement en mode de charge rapide pour charger rapidement la batterie cible comportent en outre :

lorsqu'il n'existe aucune batterie complètement chargée, la sélection d'une batterie ayant l'état de charge le plus élevé parmi les au moins deux batteries comme batterie cible lorsque le message de demande de remplacement de batterie est reçu à ce moment-là ;
la vérification d'informations concernant un moment d'arrivée prévu de l'utilisateur et le fait de vérifier si la batterie cible peut être complètement chargée ou non avant le moment d'arrivée prévu de l'utilisateur ; et
lorsqu'il est déterminé qu'il est possible d'achever la charge de la batterie cible avant le moment d'arrivée prévu, la charge rapide de la batterie cible par fonctionnement en mode de charge rapide.

**7.** Procédé selon la revendication 6, comprenant en outre :

lorsqu'il est déterminé qu'il n'est pas possible d'achever la charge de la batterie cible avant le moment d'arrivée prévu,

le maintien du fonctionnement en mode de charge standard pour charger au moins une batterie non complètement chargée parmi les au moins deux batteries.

8. Procédé selon la revendication 5, dans lequel le fonctionnement en mode de charge rapide comporte :

la modification de modes de fonctionnement d'autres convertisseurs CC/CC (3000) à l'exception d'un convertisseur CC/CC (3000) spécifique connecté à la batterie cible dans la station d'échange de batterie (D) dans un mode d'amplification ; et
le réglage de tensions d'entrée des autres convertisseurs CC/CC (3000) de façon à ce qu'elles soient supérieures à une tension de sortie du convertisseur CC/CC (3000) spécifique pour commuter une direction de transmission d'alimentation, guidant ainsi le courant de charge vers la batterie cible.

9. Procédé selon la revendication 5, dans lequel le fonctionnement en mode de charge standard comporte :
l'exécution du convertisseur CC/CC (3000) correspondant dans la station d'échange de batterie (D) dans un mode d'abaissement pour répartir et délivrer de façon égale une alimentation externe au niveau des au moins deux batteries.

10. Procédé selon la revendication 5, comprenant en outre la charge d'au moins une batterie parmi les au moins deux batteries qui n'est pas complètement chargée en maintenant le fonctionnement en mode de charge standard dans le cas où il existe une batterie complètement chargée.

11. Procédé selon la revendication 5, dans lequel le fonctionnement en mode de décharge comporte en outre :

la vérification de l'existence d'une batterie complètement chargée parmi les au moins deux batteries ;
lorsqu'il existe une batterie complètement chargée, le fait de vérifier si une batterie est en cours de charge parmi au moins deux batteries autres que la batterie complètement chargée ; et
lorsqu'aucune batterie n'est en cours de charge, la décharge de la batterie complètement chargée selon une taille d'un trop-plein de batterie, dans lequel la taille du trop-plein de batterie est un courant maximal admissible qui doit être déchargé en toute sécurité pour atteindre un état stable de la batterie défini par l'état de charge.

[Figure 1]

[Figure 2]

[Figure 3]

```
                    ┌──────────────┐
                    │    Start     │
                    └──────┬───────┘          S1000
                           │                    ⌐
                    ┌──────▼───────────────────┐
                    │ charge at least one battery│◄──────────────┐
                    └──────┬───────────────────┘                 │
                           │               S2000                 │   S3000
                           │                 ⌐                   │     ⌐
                        ◇──▼──◇            Yes        ┌───────────────────┐
                       ◇ idle   ◇──────────────►     │ operate in discharge│
                        ◇ time? ◇                    │ mode               │
                        ◇──┬──◇                      └──────────┬────────┘
                        No │                                    │
                           │          S4000                     │
                           │            ⌐                       │
         No             ◇──▼──◇                                 │
    ◄──────────────────◇ battery ◇                              │
                       ◇ exchange ◇                             │
                      ◇ request message is ◇                    │
                       ◇ received? ◇                            │
                        ◇──┬──◇                                 │
                       Yes │       S6000                        │
                           │         ⌐                          │
         Yes            ◇──▼──◇                                 │
    ◄──────────────────◇ fully charged ◇                       │
                       ◇ battery exists? ◇                     │
                        ◇──┬──◇                                │
                        No │       S7000                       │
                           │         ⌐                         │
         No            ◇──▼──◇                                 │
    ◄──────────────────◇ possible to fully ◇                  │
                      ◇ charge within expected ◇              │
                       ◇ time of arrival? ◇                   │
                        ◇──┬──◇                               │
   S5000              Yes │                                   │
     ⌐                    │                                   │
┌──────────────┐  ┌───────▼──────────┐  S8000                │
│ charge in    │  │ charge in fast    │    ⌐                  │
│ standard     │  │ charge mode       │                      │
│ charge mode  │  └────────┬─────────┘                       │
└──────┬───────┘           │         S9000                   │
       │                   │           ⌐                     │
       │                ◇──▼──◇                     No        │
       │              ◇ exchange fully ◇──────────────────────┘
       │             ◇ charged battery? ◇
       │               ◇──┬──◇
       │              Yes │
       └──────────────────►│
                           │
                    ┌──────▼───────┐
                    │     End      │
                    └──────────────┘
```

[Figure 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019299942 A1
- WO 2014009369 A2
- CN 105493378 A

- US 2021175724 A1
- WO 2021183311 A1